# EUROPÄISCHE PATENTSCHRIFT

(11) **EP 1 644 151 B1**
(45) Veröffentlichungstag und Bekanntmachung des Hinweises auf die Patenterteilung: **10.08.2016**
(21) Anmeldenummer: 04739817.7
(22) Anmeldetag: 11.06.2004
(51) Int. Cl.: B23D 43/04, B23D 43/02

(54) **Vorrichtung zur Bearbeitung und/oder Herstellung einer Vertiefung in einem Werkstück**
Device for machining and/or producing a recess in a workpiece
Dispositif pour l'usinage et/ou la formation d'un évidement dans une pièce

(30) Priorität: 01.07.2003 DE 20310134 U; 18.07.2003 DE 10332714
(43) Veröffentlichungstag der Anmeldung: 12.04.2006
(73) Patentinhaber: SEW-EURODRIVE GmbH & Co. KG, 76646 Bruchsal (DE)
(72) Erfinder: MÜLLER, Lothar, 76676 Graben-Neudorf (DE); WILHELM, Volker, 76676 Graben-Neudorf (DE)
(86) Internationale Anmeldenummer: PCT/EP2004/006327
(87) Internationale Veröffentlichungsnummer: WO 2005/002768

(56) Entgegenhaltungen:
- DD-A1- 138 285
- US-A- 1 481 437
- US-A- 3 588 976
- US-A- 3 705 448
- US-A- 4 243 347
- US-A- 4 740 115
- US-A- 5 628 589

## Beschreibung

Die Erfindung betrifft eine Vorrichtung gemäß dem Oberbegriff des Anspruchs 1 sowie ein Verfahren gemäß dem Oberbegriff des Anspruchs 7 zur Bearbeitung und/oder Herstellung einer Vertiefung in einem Werkstück.

Ein solches Verfahren bzw. eine solche Vorrichtung ist beispielweise aus US 5 628 589 A oder DD 138 285 A1 bekannt.

Aus der Internetseite www.froemag.com sind Vorrichtungen zum Herstellen einer Passfedernut bekannt, wobei ein Messer mit einer Schneide vorgesehen ist. Nachteilig ist dabei, dass eine geringe Standzeit vorhanden ist und daher die Produktion kostspielig ist. Außerdem ist das Wechseln des Messers aufwendig und daher ebenfalls kostspielig.

**Aus der** US 4 740 115 A, insbesondere Figur 8 und Spalte 7, Zeile 14 - 27, ist ein **Räumwerkzeug mit verschiedenen Sektionen bekannt, bei dem die jeweils zur Sektion gehörige Gruppe von Schneidplatten insgesamt in einem Arbeitsschritt ausgetauscht werden.**

**Aus der** US 4 243 347 A **ist ein Außenräumwerkzeug bekannt, bei dem die Schneiden zusammen als Segment befestigt, aber nicht einzeln. Außerdem wird nur eine Seite bearbeitbar.**

**Aus der** US 3 705 448 A **ist ein Räumwerkzeug mit Justierung bekannt.**

**Aus der** US 3 588 976 A **ist ein Werkzeug bekannt, das adjustierbar klemmbare Schneiden aufweist.**

**Aus der** US 5 628 589 A **ist eine interne Ziehnadel mit indexierbaren Einschüben bekannt.**

**Aus der** US 1 481 437 A **sind Nähartikel bekannt.**

**Aus der** DD 138 285 A1 **ist ein Flachräumwerkzeug mit auswechselbaren Schneidzähnen bekannt.**

**Der Erfindung liegt die Aufgabe zugrunde, eine Vorrichtung weiterzubilden, indem die Standzeit erhöht und die Kosten gesenkt werden.**

Erfindungsgemäß wird die Aufgabe bei der Vorrichtung nach den in Anspruch 1 angegebenen Merkmalen gelöst.

**Wichtige** Merkmale der Erfindung bei der Vorrichtung sind, dass die Vorrichtung **Vorrichtung zur Bearbeitung und/oder Herstellung einer Vertiefung in einem Werkstück, wobei die Vorrichtung eine Kassette umfasst, mit welcher Schneidplatten jeweils lösbar verbindbar sind, wobei die Schneidplatten als Wendeschneidplatten ausgeführt sind, wobei die Kassette mit einer Zugstange lösbar verbunden ist.** Als Vertiefung ist dabei nicht nur beispielsweise eine Passfedernut sondern auch jede beliebige anders geformte Nut zu verstehen, insbesondere eine keilförmige Nut.

Von Vorteil ist dabei, dass mehrere Schneiden bei einer Hubbewegung im Einsatz sind und somit mehr Material herausarbeitbar, die Zustellung und die Standzeit vergrößerbar ist. Insbesondere ist eine jeweilige Schneidplatte nach Verschleiß austauschbar oder 180° verdrehbar zum Wechseln einer arbeitenden Kante der Schneidplatte. Darüber hinaus ist die Kassette gegen eine andere Kassette austauschbar, wodurch die Bearbeitungsart wechselbar ist, also statt der bloßen Bearbeitung der Nutflanken die Bearbeitung des Nutgrundes oder sogar der ganzen Nut. Es ist sogar eine Kassette austauschbar gegen eine Kassette mit Schneidplatten, die statt zur Hartbearbeitung zur Weichbearbeitung verwendbar ist.

**Erfindungsgemäß** sind die Schneidplatten als Wendeschneidplatten ausgeführt. Von Vorteil ist dabei, dass eine arbeitende und eine nicht arbeitendes Kante gegeneinander austauschbar sind. Somit muss nicht unbedingt die ganze Schneidplatte getauscht werden.

**Erfindungsgemäß** ist die Kassette mit einer Zugstange lösbar verbunden. Von Vorteil ist dabei, dass die Kassette je nach Nutgröße und/oder Bearbeitungsart gegen eine andere Kassette austauschbar ist.

**Erfindungsgemäß** sind Einstellmittel zum Justieren der Schneidplatten vorgesehen. Von Vorteil ist dabei, dass die Zustellung der Schneidplatten zum Material fein justierbar ist, insbesondere bei Verwendung einer Kegelverschraubung als Einstellmittel. Somit ist also die Fertigungsqualität weiter verbesserbar.

Bei einer vorteilhaften Ausgestaltung arbeitet mehr als eine Schneide, also Kante einer Schneidplatte, beim Bearbeiten und/oder Herstellen gleichzeitig. Von Vorteil ist dabei, dass der Verschleiß verringerbar und die Standzeit erhöhbar ist.

Bei einer vorteilhaften Ausgestaltung sind die Schneidplatten an mindestens einer Seitenwand der Kassette befestigt sind. Von Vorteil ist dabei, dass die Nutflanken bearbeitbar sind.

Bei einer vorteilhaften Ausgestaltung ist mindestens eine Ausnehmung als Spanraum vorgesehen. Von Vorteil ist dabei, dass ein Raum für Späne vorhanden ist.

Bei einer vorteilhaften Ausgestaltung ist mindestens eine Ausnehmung als Schutz für eine nicht arbeitende Kante einer Schneidplatte vorgesehen. Von Vorteil ist dabei, dass die zweite Kante aus dem geschützten Bereich herausnehmbar ist und dann die arbeitende Kante ersetzbar ist.

Bei einer vorteilhaften Ausgestaltung ist die lösbare Verbindung mittels Schrauben, insbesondere Spann- oder Befestigungsschrauben, ausgeführt. Von Vorteil ist dabei, dass die Kassette und/oder die Schneidplatten schnell und einfach und somit kostengünstig gegen jeweilige andere austauschbar sind.

Bei einer vorteilhaften Ausgestaltung ist mehrere Schneidplatten in Längsrichtung der Kassette hintereinander angeordnet sind, wobei die jeweils nächste tiefer ins Werkstück eingreifend vorgesehen. Von Vorteil ist dabei, dass der Verschleiß verringerbar, die Zustellung und die Standzeit vergrößerbar ist.

Bei einer vorteilhaften Ausgestaltung ist das Material des Werkstücks gehärtet. Von Vorteil ist dabei, dass eine Hartbearbeitung mit entsprechend geeigneten Schneidplatten ausführbar ist.

Bei einer vorteilhaften Ausgestaltung ist das Material des Werkstücks weich, also ungehärtet. Von Vorteil ist dabei, dass bei geeignet gewählten Schneidplatten auch eine Weichbearbeitung des Werkstücks ermöglicht ist.

Bei einer vorteilhaften Ausgestaltung ist mittels der Vorrichtung in das Werkstück eine Passfedernut aus dem Vollen, also aus dem vollen und ungehärteten Material des Werkstücks, bearbeitbar. Von Vorteil ist dabei, dass keine andere Vorbearbeitung notwendig ist und die gesamte Passfedernut aus dem Vollen herausarbeitbar ist, also die Nutflanken und der Nutgrund zusammen. Somit ist die Bearbeitungszeit und daher auch die Fertigungskosten verringerbar.

Weitere Vorteile ergeben sich aus den Unteransprüchen.

Die Erfindung wird nun anhand von Abbildungen näher erläutert:

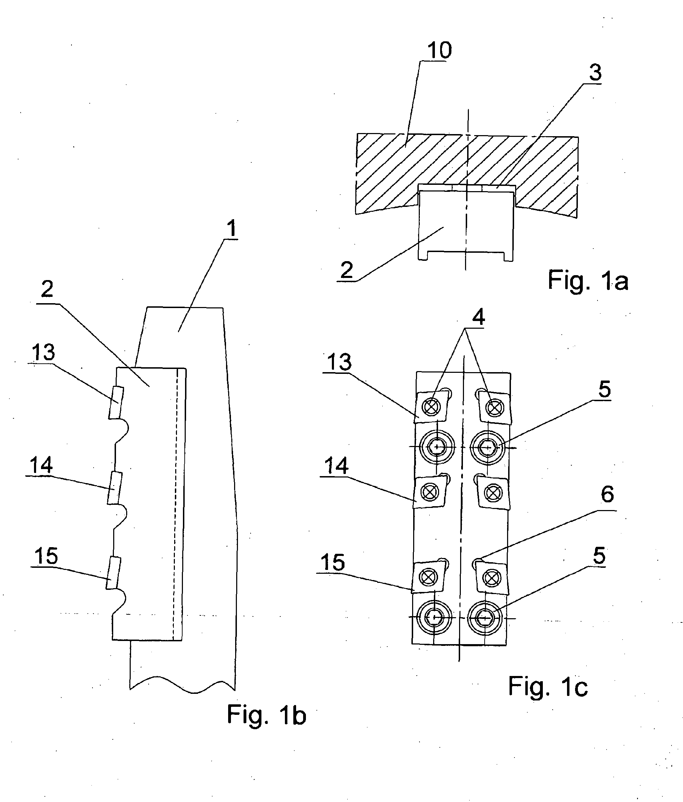

In der Figur 1a, 1b und 1 c ist eine erfindungsgemäße Vorrichtung in Vorderansicht, Schnittansicht und Draufsicht schematisch gezeigt.

Auf der Zugstange 1 ist eine Kassette 2 mittels Befestigungsschrauben 5 befestigt. Die Schneidplatten (13, 14, 15) sind paarweise mittels Spannschrauben 4 auf die Kassette 2 aufgeschraubt und somit mit dieser lösbar verbunden. Die Schneidplatten (13, 14, 15) sind in Längsrichtung der Kassette 2 angeordnet. Dabei ist die Schneidplatte 14 geringfügig höher angeordnet als die Schneidplatte 15 und die Schneidplatte 13 geringfügig höher als die Schneidplatte 14. Beim Durchziehen der Kassette 2 durch das Werkstück 10 kommen somit die Schneidplatten nacheinander zum Eingriff und die Schneidplatte 13 ist tiefer ins Werkstück 10 eingesenkt als die Schneidplatte 14, die wiederum ebenfalls tiefer ins Werkstück 10 eingesenkt ist als die Schneidplatte 15.

Die Vorrichtung ist besonders vorteilhaft verwendbar zur Hartbearbeitung einer Passfedernut. Hierzu ist die Passfedernut schon bei der Weichbearbeitung vorbearbeitet, also beispielsweise geräumt, gestoßen oder gefräst, und muss nach dem darauf folgenden Härten mittels der Hartbearbeitung endbearbeitet werden, weil der Härteverzug die bei der Weichbearbeitung erzeugte geometrische Ausformung ändert. Vorteiligerweise sind für die Hartbearbeitung die Schneidplatten aus entsprechend hartem Material gefertigt.

Beim Durchziehen der Kassette 2 mit den Schneidplatten (13, 14, 15) schneiden diese mit ihren arbeitenden Kanten die Nutflanke der Passfedernut, also die Seitenflächen der Passfedernut.

Vorteiligerweise sind die Schneidplatten (13, 14, 15) mit zwei Kanten gefertigt, von denen eine erste zur Bearbeitung vorgesehen ist und die zweite in einer Ausnehmung 6 zum Schutz sich befindet. Nach Abnutzung der arbeitenden Kante, ist die Schneidplatte nach Lösen derselben um 180 ° verdrehbar und nach dem Drehen wiederum befestigbar. Somit kommt dann die zweite Kante zum Arbeitseinsatz. Auf diese Weise ist die Standzeit der Schneidplatte erhöhbar.

Die arbeitende Kante hat eine kleinere Kantenlänge als die Länge der anderen, senkrecht zu dieser Kante verlaufenden Kanten der jeweiligen Schneidplatte.

Wie in Figur 1a gezeigt, ist vor der arbeitenden Kante der Schneidplatten (13, 14, 15) jeweils eine als Spanraum arbeitende Ausnehmung vorgesehen.

Dadurch dass beim Hindurchziehen durchs Werkstück 10 die arbeitenden Kanten der drei Schneidplatten (13, 14, 15) hintereinander zum Eingriff gelangen, ist eine größere Standzeit erreichbar und die Kosten sind verringerbar, insbesondere im Vergleich zum Stand der Technik.

Bei weiteren erfindungsgemäßen Ausführungsbeispielen sind auch mehr Schneidplatten oder weniger Schneidplatten (13, 14, 15) vorsehbar.

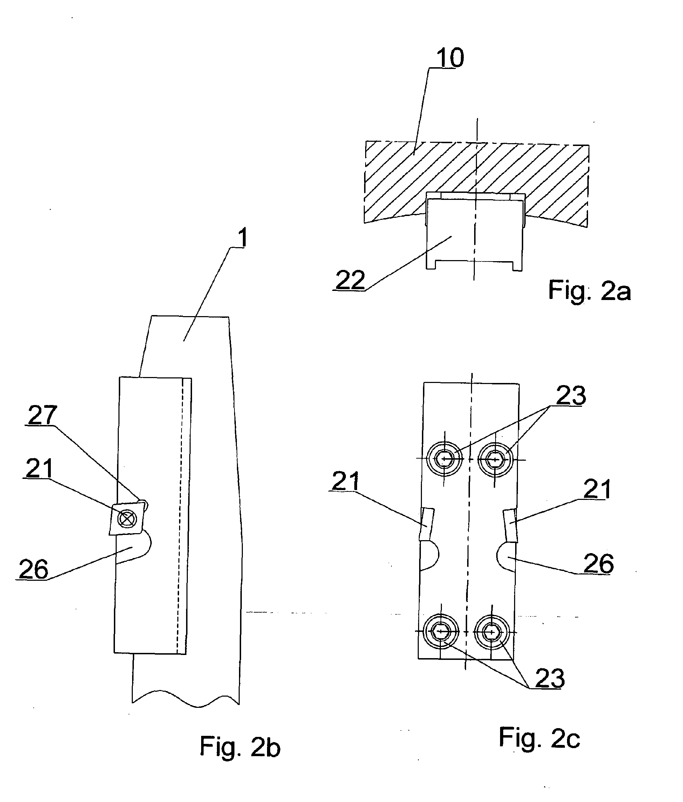

In der Figur 2a, 2b und 2c ist eine andere erfindungsgemäße Vorrichtung in Vorderansicht, Schnittansicht und Draufsicht schematisch gezeigt.

Auf der Zugstange 1 ist eine Kassette 22 mittels Befestigungsschrauben 23 befestigt. Die Schneidplatten 21 sind als Paar mittels Spannschrauben an die Seitenwände der Kassette angeschraubt. Die arbeitende Kante der Schneidplatten 21 weist eine größere Kantenlänge auf als die Dicke der Schneidplatten beträgt. Somit eignet sich die Vorrichtung besonders für die Bearbeitung einer tieferen Passfedernut.

Vor den Schneidplatten 21 ist jeweils eine Ausnehmung 26 als Spanraum seitlich an der Kassette angeordnet und an der nicht arbeitenden Kante wiederum eine kleine Ausnehmung 27 zum Schutz dieser nicht arbeitenden Kante.

Mittels einer 180° verdrehten Befestigung ist wiederum die arbeitende und nicht arbeitende Kante austauschbar zur Erhöhung der Standzeit.

Die Vorrichtung nach Figur 2a, 2b, 2c ist ebenfalls vorteiligerweise zur Hartbearbeitung verwendbar.

Bei weiteren erfindungsgemäßen Ausführungsbeispielen sind mehrere Schneidplatten 21 hintereinander angeordnet, die beim Durchziehen durch die Passfedernut jeweils tiefer in das Werkstück eindringen. Insbesondere sind auch die Ausnehmungen 26 und 27 entsprechend vorgesehen.

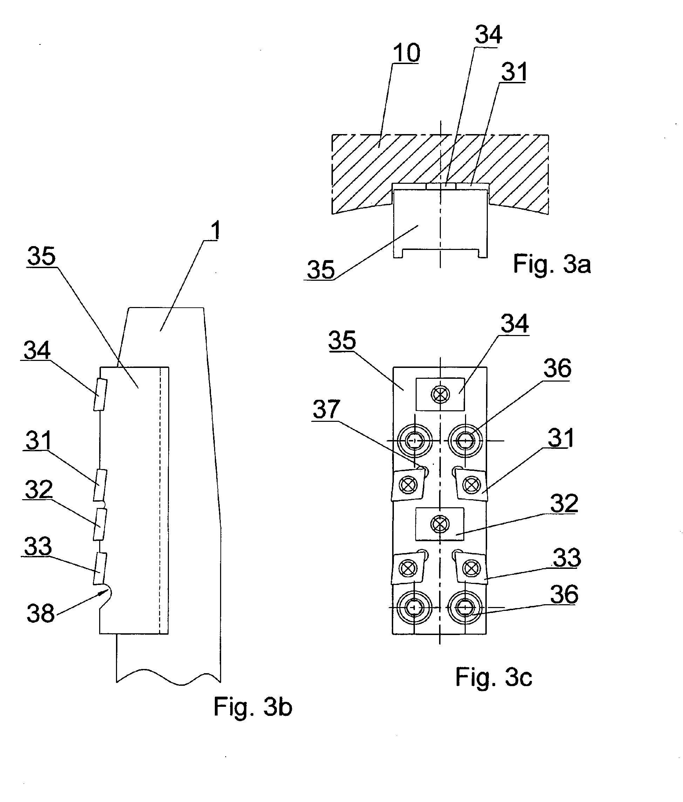

In der Figur 3a, 3b und 3c ist eine erfindungsgemäße Vorrichtung in Vorderansicht, Schnittansicht und Draufsicht schematisch gezeigt.

Auf der Zugstange 1 ist eine Kassette 35 mittels Befestigungsschrauben 36 befestigt. Die Schneidplatten (31,32,33,34) sind mittels Spannschrauben auf der oberen Seite der Kassette 35 aufgeschraubt und in Längsrichtung der Kassette 35 angeordnet.

Dabei gibt es zwei Sorten von Schneidplatten. Eine erste Sorte umfasst die Schneidplatten 31 und 33. Diese sind der Figur 1a, 1b, 1c entsprechend zur Bearbeitung der Nutflanken mit ihren kurzen, eine kleine Länge aufweisenden Kanten vorgesehen. Allerdings arbeiten bei der Vorrichtung nach Figur 3a, 3b, 3c auch die längeren Kanten der Schneidplatten 31 und 33. Mit diesen wird ein Teil des Nutgrundes der Passfedernut bearbeitet. Die zweite Sorte Schneidplatten, nämlich die Schneidplatten 32 und 34, ist auf der oberen Seite der Kassette 35 angeordnet. Somit bearbeiten die Schneidplatten 32 und 34 mit ihren längeren Seiten den Nutgrund mittig.

Auf diese Weise ist beim Durchziehen der Kassette 35 die gesamte Passfedernut, umfassend Passfederflanken und Passfedergrund, bearbeitbar.

Die Schneidplatte 31 ist geringfügig tiefer ins Werkstück eingreifend als die Schneidplatte 33. Gleiches gilt für die Schneidplatte 34 die geringfügig tiefer ins Werkstück eingreift als die Schneidplatte 32. Beim Durchziehen der Kassette 35 durch das Werkstück 10 kommen somit die Schneidplatten nacheinander zum Eingriff. Daher ist das Spanvolumen pro Durchziehen und die Standzeit insgesamt erhöhbar.

Die Vorrichtung ist wiederum für die Hartbearbeitung verwendbar.

Bei weiteren erfindungsgemäßen Ausführungsbeispielen ist die Vorrichtung nach Figur 3a, 3b, 3c sogar zur Weichbearbeitung einsetzbar. Dabei ist die Passfedernut aus dem vollen Material des Werkstücks 10 herausbearbeitbar.

Die Ausnehmung 37 dient wiederum zum Schutz der nicht arbeitenden Kante. Die Ausnehmung 38 dient wiederum als Spanraum.

Bei weiteren erfindungsgemäßen Ausführungsbeispielen ist die Kassette 35 verlängert ausführbar. Somit sind auch weitere Schneidplatten vorsehbar, mit denen die Standzeit noch weiter verbesserbar ist.

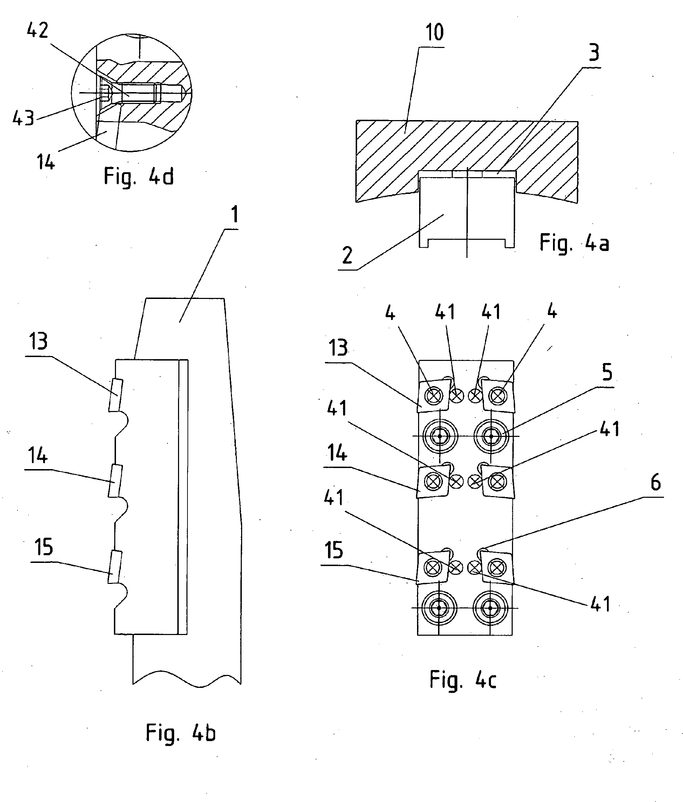

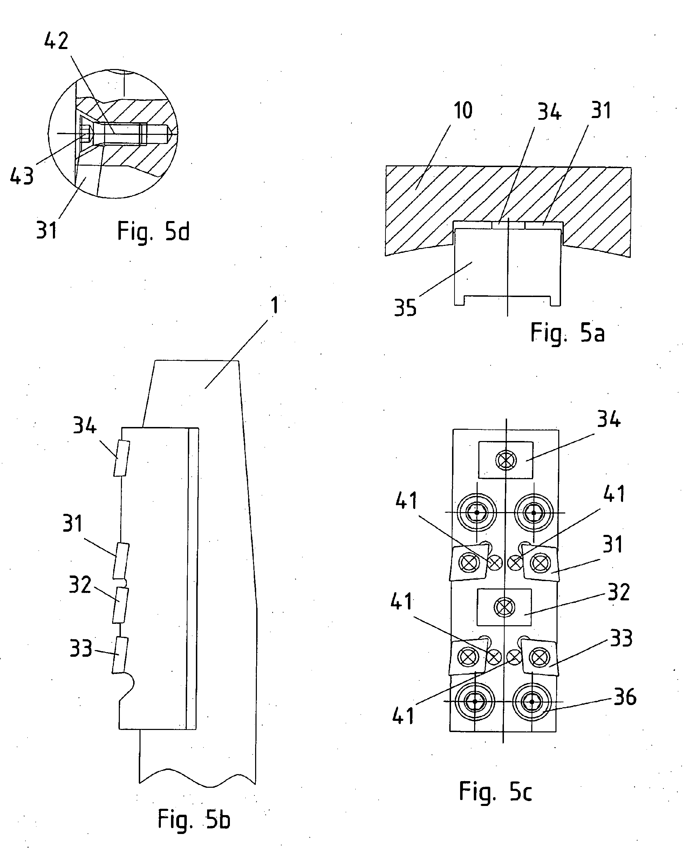

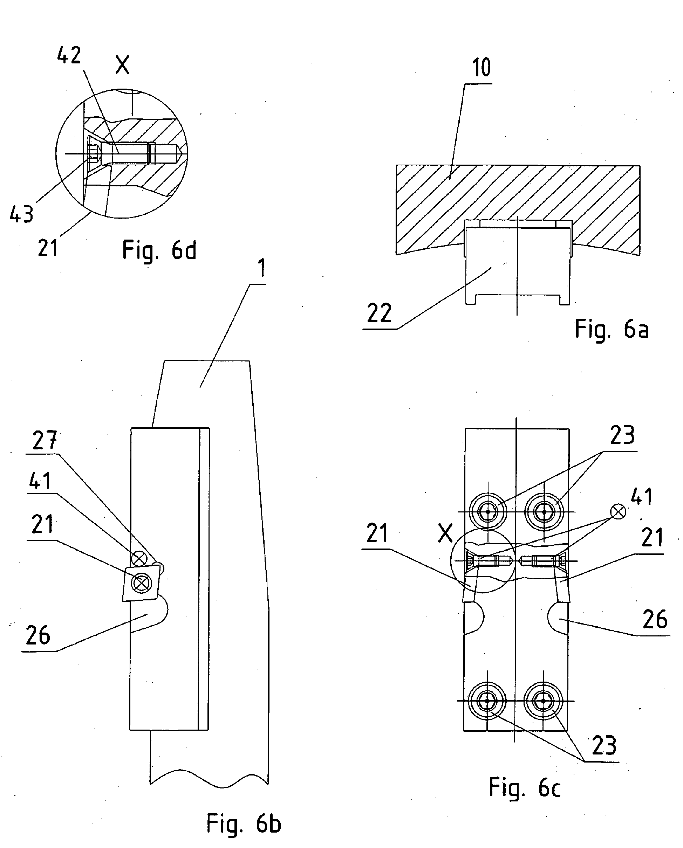

Weitere erfindungsgemäße Ausführungsbeispiele sind in den Figuren 4,5,und 6 gezeigt. Die Figuren 4a, 4b, 4c entsprechen dem Ausführungsbeispiel der Figuren 1a, 1b, 1c. Die Figuren 5a, 5b, 5c entsprechen dem Ausführungsbeispiel der Figuren 3a, 3b, 3c. Die Figuren 6a, 6b, 6c entsprechen dem Ausführungsbeispiel der Figuren 2a, 2b, 2c. Dabei sind alle in den Figuren 4,5 und 6 gezeigten erfindungsgemäßen Ausführungsbeispiele gegenüber den Ausführungsbeispielen der Figuren 1, 2 bis 3 mit einer zusätzlich vorgesehenen Verstellmöglichkeit für die Schneidplatten ausgestattet. Dieses Einstellmittel ist als Einzelheit 41 mit X gekennzeichnet und in den Figuren 4d, 5d und 6d als Schnitt dargestellt. Auch in Figur 6c ist die Einzelheit 41 deutlich gezeigt

Dabei ist eine Kegelschraube 42 vorgesehen, die mit einem Werkzeug an einem Innensechskant 43 drehbar ist, beim Drehen mittels des Gewindes in ihrer axialen Richtung verschiebbar ist und durch ihren kegelförmigen Kopf abhängig vom Winkelbetrag der Drehung einen seitlichen Druck auf die jeweilige Schneidplatte ausübt.

Somit wird beim Einstellen oder Justieren die jeweilige Schneidplatte mittels ihrer jeweiligen Spannschraube 4 nicht ganz fest also leicht angezogen, danach die Einstellung mittels Drehen der Kegelschraube 42 ausgeführt und am Ende werden die Spannschrauben 4 fest angezogen und somit die Justierung fixiert.

Mittels der beschriebenen Kegelverschraubung ist also eine Fein-Einstellung der Schneidplatten ermöglicht und somit die Fertigungsqualität verbesserbar und die Toleranzen sind verringerbar. Wesentlicher Vorteil ist insbesondere, dass die durch die Toleranzen der einzelnen Komponenten, also Kassette, Schneidplatte, Bohrbilder, Spannschrauben und dergleichen, entstehende Gesamt-Toleranz mittels der Einstell-Möglichkeit ausgleichbar ist und das fertige Werkzeug am Ende justierbar ist, also die Gesamt-Toleranz ausgleichbar ist. Somit ist also auch die relative räumliche Lage der Schneidplatten zueinander justierbar, wenn alle Einstellmittel angepasst sind.

Bei weiteren erfindungsgemäßen Ausführungsbeispielen ist nicht nur die beschriebene Fertigung einer Passfedernut sondern auch jede andere Vertiefung oder Ausnehmung mittels der Erfindung ermöglicht. Beispielsweise ist auch eine keilförmige Nut fertigbar, wobei die Kassette entsprechend geformt ist und die Schneidplatten entsprechend anders angeordnet sind.

### Bezugszeichenliste

- 1: Zugstange
- 2: Kassette
- 4: Spannschraube
- 5: Befestigungsschraube
- 6: Ausnehmung zum Schutz
- 10: Werkstück
- 13: Schneidplatte
- 14: Schneidplatte
- 15: Schneidplatte
- 21: Schneidplatte
- 22: Kassette
- 23: Befestigungsschraube
- 26: Ausnehmung als Spanraum
- 27: Ausnehmung zum Schutz
- 31: Schneidplatte
- 32: Schneidplatte
- 33: Schneidplatte
- 34: Schneidplatte
- 35: Kassette
- 36: Befestigungsschrauben
- 37: Ausnehmung
- 41: Einzelheit X, Einstellmittel
- 42: Kegelschraube
- 43: Innensechskant

## Patentansprüche

1. Vorrichtung zur Bearbeitung und/oder Herstellung einer **Vertiefung** in einem Werkstück (10),
**wobei** die Vorrichtung eine Kassette (2, 22, 35) umfasst, mit welcher Schneidplatten (13, 14,15, 21, 31, 32, 33, 34) **jeweils** lösbar verbindbar sind,
**wobei die Schneidplatten (13, 14,15, 21, 31, 32, 33, 34) als Wendeschneidplatten ausgeführt sind**
**wobei die Kassette (2, 22, 35) mit einer Zugstange (1) lösbar verbunden ist,**
**dadurch gekennzeichnet, dass**
**Einstellmittel zum Justieren der Schneidplatten (13, 14,15, 21, 31, 32, 33, 34) vorgesehen sind,**
**wobei die Einstellmittel eine eindimensionale Verschiebung der Schneidplatten (13, 14,15, 21, 31, 32, 33, 34), insbesondere eine Zustellung, bewirkbar machen,**
**wobei die Einstellmittel mindestens eine Schraube mit kegelförmigem Kopf umfassen.**

2. Vorrichtung nach Anspruch 1,
**dadurch gekennzeichnet, dass**
die Schneidplatten (13, 14,15, 21, 31, 32, 33, 34) an mindestens einer Seitenwand der Kassette (2, 22, 35) befestigt sind.

3. Vorrichtung nach mindestens einem der vorangegangenen Ansprüche,
**dadurch gekennzeichnet, dass**
mindestens eine Ausnehmung (26) als Spanraum vorgesehen ist.

4. Vorrichtung nach mindestens einem der vorangegangenen Ansprüche,
**dadurch gekennzeichnet, dass**
mindestens eine Ausnehmung (6, 27) als Schutz für eine nicht arbeitende Kante einer Schneidplatte (13, 14,15, 21, 31, 32, 33, 34) vorgesehen ist.

5. Vorrichtung nach mindestens einem der vorangegangenen Ansprüche,
**dadurch gekennzeichnet, dass**
die lösbare Verbindung mittels Schrauben, insbesondere Spann- oder Befestigungsschrauben (5, 23, 36), ausgeführt ist.

6. Vorrichtung nach mindestens einem der vorangegangenen Ansprüche,
**dadurch gekennzeichnet, dass**
mehrere Schneidplatten (13, 14,15, 21, 31, 32, 33, 34) in Längsrichtung der Kassette (2, 22, 35) hintereinander angeordnet sind, wobei die jeweils nächste tiefer ins Werkstück (10) eingreifend vorgesehen ist.

7. Verfahren zur Bearbeitung und Herstellung einer Vertiefung in einem Werkstück (10) mit einer Vorrichtung nach mindestens einem der vorangegangenen Ansprüche,
**dadurch gekennzeichnet, dass**
die Vertiefung eine keilförmige Nut ist oder eine Passfedernut ist,
wobei mehr als eine Schneide, also Kante einer Schneidplatte (13, 14,15, 21, 31, 32, 33, 34), beim Bearbeiten und/oder Herstellen gleichzeitig arbeitet.

8. Verfahren nach Anspruch 7,
**dadurch gekennzeichnet, dass**
mittels der Vorrichtung in das Werkstück (10) eine Passfedernut aus dem Vollen, also aus dem vollen und ungehärteten Material des Werkstücks (10), bearbeitet wird.

## Claims

1. Device for machining and/or producing an indentation in a workpiece (10),
wherein the device comprises a cassette (2, 22, 35), to which cutting dies (13, 14, 15, 21, 31, 32, 33, 34) are respectively detachably connectable,
wherein the cutting dies (13, 14, 15, 21, 31, 32, 33, 34) are formed as indexable cutting dies,
wherein the cassette (2, 22, 35) is detachably connected to a pull rod (1),
**characterised in that**
adjusting means for adjusting the cutting dies (13, 14, 15, 21, 31, 32, 33, 34) are provided,
wherein the adjusting means make achievable a one-dimensional displacement of the cutting dies (13, 14, 15, 21, 31, 32, 33, 34), in particular a feed motion,
wherein the adjusting means comprise at least one screw with a cone-shaped head.

2. Device according to claim 1,
**characterised in that**
the cutting dies (13, 14, 15, 21, 31, 32, 33, 34) are fastened to at least one side wall of the cassette (2, 22, 35).

3. Device according to at least one of the preceding claims,
**characterised in that**
at least one recess (26) is provided as a chip space.

4. Device according to at least one of the preceding claims,
**characterised in that**
at least one recess (6, 27) is provided as protection for a non-working edge of a cutting die (13, 14, 15, 21, 31, 32, 33, 34).

5. Device according to at least one of the preceding claims,
**characterised in that**
the detachable connection is formed by means of screws, in particular clamping or fastening screws (5, 23, 36).

6. Device according to at least one of the preceding claims,
**characterised in that**
a plurality of cutting dies (13, 14, 15, 21, 31, 32, 33, 34) are arranged one behind the other in the longitudinal direction of the cassette (2, 22, 35), the respectively next one being provided to engage deeper into the workpiece (10).

7. Method for machining and producing an indentation in a workpiece (10) using a device according to at least one of the preceding claims,
**characterised in that**
the indentation is a wedge-shaped groove or a feather key groove,
wherein more than one cutting edge, that is to say edge of a cutting die (13, 14, 15, 21, 31, 32, 33, 34), works simultaneously during the machining and/or producing.

8. Method according to claim 7,
**characterised in that**
a feather key groove is machined in the workpiece (10) by means of the device from the solid, that is to say from the solid and unhardened material of the workpiece (10).

## Revendications

1. Dispositif dévolu à l'usinage et/ou à la production d'une creusure dans une pièce (10),
ledit dispositif incluant une cassette (2, 22, 35) à laquelle des platines de coupe (13, 14, 15, 21, 31, 32, 33, 34) peuvent être respectivement reliées de manière dissociable, lesdites platines de coupe (13, 14, 15, 21, 31, 32, 33, 34) étant réalisées en tant que platines de coupe réversibles,
ladite cassette (2, 22, 35) étant reliée amoviblement à une tige de traction (1),
**caractérisé par le fait que**
des moyens de réglage sont prévus pour ajuster les platines de coupe (13, 14, 15, 21, 31, 32, 33, 34),
lesdits moyens de réglage permettant l'exécution d'un coulissement unidimensionnel desdites platines de coupe (13, 14, 15, 21, 31, 32, 33, 34), en particulier d'une avance, lesdits moyens de réglage incluant au moins une vis à tête tronconique.

2. Dispositif selon la revendication 1,
**caractérisé par le fait que**
les platines de coupe (13, 14, 15, 21, 31, 32, 33, 34) sont fixées à au moins une paroi latérale de la cassette (2, 22, 35).

3. Dispositif selon au moins l'une des revendications précédentes,
**caractérisé par le fait**
**qu'**au moins un évidement (26) est prévu en tant que réceptacle de copeaux.

4. Dispositif selon au moins l'une des revendications précédentes,
**caractérisé par le fait**
**qu'**au moins un évidement (6, 27) est prévu en tant que protection dédiée à une arête inactive d'une platine de coupe (13, 14, 15, 21, 31, 32, 33, 34).

5. Dispositif selon au moins l'une des revendications précédentes,
**caractérisé par le fait que**
la liaison dissociable est établie au moyen de vis, en particulier des vis (5, 23, 36) de serrage ou de fixation.

6. Dispositif selon au moins l'une des revendications précédentes,
**caractérisé par le fait que**
plusieurs platines de coupe (13, 14, 15, 21, 31, 32, 33, 34) sont agencées en succession dans la direction longitudinale de la cassette (2, 22, 35), la platine respectivement successive étant prévue pour pénétrer plus profondément dans la pièce (10).

7. Procédé dévolu à l'usinage et à la production d'une creusure dans une pièce (10), à l'aide d'un dispositif conforme à au moins l'une des revendications précédentes,
**caractérisé par le fait que**
la creusure est une rainure cunéiforme ou une rainure de clavetage,
sachant que plus d'un tranchant, c'est-à-dire une arête d'une platine de coupe (13, 14, 15, 21, 31, 32, 33, 34) opère en simultanéité au cours de l'usinage et/ou de la production.

8. Procédé selon la revendication 7,
**caractérisé par le fait**
**qu'**au moyen du dispositif, une rainure de clavetage est usinée dans la pièce (10) à partir de la masse pleine, c'est-à-dire à partir du matériau massif et non durci constituant ladite pièce (10).
